# EUROPÄISCHE PATENTSCHRIFT

(11) **EP 3 357 283 B1**
(45) Veröffentlichungstag und Bekanntmachung des Hinweises auf die Patenterteilung: **13.01.2021**
(21) Anmeldenummer: 16766912.6
(22) Anmeldetag: 13.09.2016
(51) Int. Cl.: H04W 52/28, H04B 7/06

(54) **VERFAHREN UND VORRICHTUNG ZUR VERBESSERUNG DER SIGNALQUALITÄT MINDESTENS EINES KOMMUNIKATIONSDIENSTES IM BEREICH EINES FAHRZEUGS**
METHOD AND DEVICE FOR IMPROVING THE SIGNAL QUALITY OF AT LEAST ONE COMMUNICATIONS SERVICE IN THE REGION OF A VEHICLE
PROCÉDÉ ET DISPOSITIF POUR AMÉLIORER LA QUALITÉ DE SIGNAL D'AU MOINS UN SERVICE DE COMMUNICATION DANS LA ZONE D'UN VÉHICULE

(30) Priorität: 02.10.2015 DE 102015219110
(43) Veröffentlichungstag der Anmeldung: 08.08.2018
(73) Patentinhaber: VOLKSWAGEN AKTIENGESELLSCHAFT, 38440 Wolfsburg (DE)
(72) Erfinder: BUBURUZAN, Teodor, 38118 Braunschweig (DE)
(86) Internationale Anmeldenummer: PCT/EP2016/071549
(87) Internationale Veröffentlichungsnummer: WO 2017/055076

(56) Entgegenhaltungen:
- DE-A1-102010 061 540
- US-A1- 2015 282 001
- "Intelligent Transport Systems (ITS); Mitigation techniques to avoid interference between European CEN Dedicated Short Range Communication (CEN DSRC) equipment and Intelligent Transport Systems (ITS) operating in the 5 GHz frequency range;Draft ETSI TS 102 792", ETSI DRAFT; DRAFT ETSI TS 102 792, EUROPEAN TELECOMMUNICATIONS STANDARDS INSTITUTE (ETSI), 650, ROUTE DES LUCIOLES ; F-06921 SOPHIA-ANTIPOLIS ; FRANCE, Bd. ITS, Nr. V1.1.15, 12. Juni 2015 (2015-06-12), Seiten 1-23, XP014242544, [gefunden am 2015-06-12]

## Beschreibung

Die Erfindung betrifft ein Verfahren und eine Vorrichtung zur Verbesserung der Signalqualität mindestens eines Kommunikationsdienstes im Bereich eines Fahrzeugs sowie ein Fahrzeug.

Fahrzeuge, insbesondere PKWs, werden demnächst vermehrt mit Kommunikationssystemen oder-diensten ausgestattet. Eine erste Art von Dienst stellt eine Kommunikationsverbindung zwischen Fahrzeugen beziehungsweise von einem Fahrzeug zu einer Infrastruktur, wie zum Beispiel einer Ampel, her. Derartige Konzepte werden zum Beispiel als Car-to-Car-Systeme, Car-to-Infrastructure-Systeme oder Car-to-X-Systeme bezeichnet, wobei das X als Platzhalter für beliebige Infrastruktureinrichtungen, andere Fahrzeuge und andere Verkehrsteilnehmer steht. Weitere übliche Bezeichnungen sind Car2C-, Car2X-, C2C- bzw. C2X-Systeme, Vehicle-to-Vehicle-Systeme (V2V), Vehicle-to-Infrastructure-Systeme (V2I) oder Vehicle-to-X-Systeme (V2X).

Zukünftige V2X-Geräte werden in dem 5,9 GHz Frequenzband aktiv werden. In einem benachbarten 5,8 GHz Frequenzband sind zurzeit Mauterfassungssysteme aktiv. Um den Mautbetrieb nicht zu stören, werden die V2X-Geräte diese Maut-Systeme detektieren müssen und dann werden Abstimmungen vorgenommen werden müssen, um eine gegenseitige Beeinflussung der benachbarten Frequenzbänder zu vermeiden. Um die Präsenz solcher Maut-Systeme zu detektieren, werden nach derzeitigem Stand die V2X-Geräte zusätzliche Hardware einsetzen, um das 5,8 GHz Frequenzband des Mautsystems abzuhören und die dort aktiven Maut-Stationen so detektieren. Diese zusätzliche Hardware ist mit zusätzlichen Kosten verbunden.

Zurzeit werden verschiedene Schutz-Mechanismen eingesetzt, wie zum Beispiel starkes Filtern der beiden Frequenzbänder, 5,8 GHz und 5,9 GHz, um diese abzutrennen. In einer anderen Variante werden die 5,9 GHz V2X-Geräte zusätzlichen Detektoren für das 5,8 GHz Band enthalten, um dort die aktiven Maut-Systeme zu detektieren. Alternativ, können die 5,8 Ghz Maut-Systeme zusätzlich in dem 5,9 Ghz Frequenzband aktiv sein und dort ihre Präsenz ankündigen.

DE 10 2009 050 503 A1 offenbart weiterhin eine optische Erkennung von Mautstellen, einer erkennbaren Geometrie der Stellen und des Fahrzeugflusses durch diese Stellen, um in solch einer Situation einen freien Pfad für das Fahrzeug zu definieren.

DE 10 2013 227 144 A1 offenbart eine Anpassung der Antennencharakteristik einer Infrastruktureinheit an eine detektierte Verkehrstopologie, wie Straßentopologie, Verkehrsrichtung oder Verkehrsfluss.

Draft ETSI TS 102 792 V0. 1. 8 und V1.1.15: Intelligent Transport Systems (IST); Mitigation techniques to avoid interference between European CEN Dedicated Short Range Communication (CEN DSRC) equipment and intelligent Transport Systems (ITS) operating in the 5 GHz frequency range offenbaren ein Verfahren zur Verringerung von Interferenzen zwischen einer Kurzbereichskommunikation (CEN DSRC) einer Mautinfrastruktur und ITS G5 Teilnehmern. Dies kann kartenbasiert erfolgen, wobei die Position eines ITS G5 Teilnehmers mit auf einer Karten gespeicherten Positionen der Mautinfrastruktur verglichen werden und in Abhängigkeit der ermittelten Entfernung Maßnahmen ergriffen werden.

DE 10 2010 061 540 A1 lehrt eine Kommunikationseinrichtung für drahtlose Kommunikation zwischen überwiegend hochmobilen Kommunikationsteilnehmern auf einem ersten dedizierten Frequenzband. Eine Kommunikationseinrichtung kann ihr Sendeverhalten eigenständig in lokaler Nähe zu einer solchen stationären oder quasi-stationären Fremdkommunikationseinrichtung beschränken, die auf einem zweiten dedizierten Frequenzband (B) empfängt, das dem ersten Frequenzband (A) benachbart ist.

US 2014/0 094 165 A1 offenbart ein Verfahren zur Verringerung von Interferenzen zwischen zwei benachbarten Kommunikations-Frequenzbändern, wobei eine Aktivität in dem Frequenzband überwacht wird und entsprechend die Sendeaktivität von Basisstationen angepasst wird.

US 2015/0282001 A1 lehrt ein Strahlformungsverfahren umfassend das Bestimmen verschiedener Strahlen für Teile der Endgeräte auf der Grundlage von Kanalinformationen, die von den Teilen der Endgeräte zurückgesendet werden.

Der Erfindung liegt nun die Aufgabe zugrunde, die Koexistenz benachbarter Kommunikationsdienste zu verbessern.

Diese Aufgabe wird gelöst durch ein Verfahren gemäß Anspruch 1, einer Vorrichtung gemäß Anspruch 7, beziehungsweise ein Fahrzeug gemäß Anspruch 9.

Das erfindungsgemäße Verfahren zur Verbesserung der Signalqualität mindestens eines Kommunikationsdienstes eines Fahrzeugs, wobei zwei unterschiedliche Kommunikationsdienste in benachbarten Frequenzbändern vorgesehen sind und wobei zumindest ein erster Kommunikationsdienst im Fahrzeug implementiert ist, umfasst, dass im Fahrzeug Positionen von ortsfesten Installationen eines zweiten Kommunikationsdienstes hinterlegt werden, dass das Fahrzeug seine Position mit den Positionen von ortsfesten Installationen vergleicht, dass eine Sendecharakteristik des ersten Kommunikationsdienstes in einem definierten Umfeld zu den Positionen von ortsfesten Installationen angepasst wird und dass die Anpassung der Sendecharakteristik durch eine Änderung der Abstrahlcharakteristik einer Sendeeinheit des Fahrzeugs derart erfolgt, dass die Abstrahlung in Richtung der ortsfesten Installation verringert wird.

Die Hinterlegung kann eine direkte Speicherung sein oder das Verfügbarmachen über einen Kommunikationsdienst wie ein Mobilfunknetz oder das Internet. In oder innerhalb eines definierten Umfelds wird dann die Sendecharakteristik des ersten Kommunikationsdienstes beziehungsweise eines Senders des Fahrzeugs, mit dem das Fahrzeug mit dem ersten Kommunikationsdienst kommuniziert angepasst. Die Anpassung kann auch unmittelbar vor Erreichen des Umfelds vorgenommen werden, so dass das Fahrzeug bei Eintritt in den Umfeldbereich bereits die geforderte Sendecharakteristik aufweist. Der Begriff im Bereich eines Fahrzeugs umfasst sowohl dass der Kommunikationsdienst im Fahrzeug installiert ist, wie der erste Kommunikationsdienst, als auch dass der Kommunikationsdienst extern zu dem Fahrzeug ist, wie der zweite Kommunikationsdienst. Extern kann verstanden werden als außerhalb des Fahrzeugs oder dass das Fahrzeug nicht an diesem Dienst teilnimmt.

Das erfindungsgemäße Verfahren hat den Vorteil, dass keine zusätzliche, kostenintensive Hardware eingesetzt werden muss. Es muss lediglich eine Liste, eine Tabelle oder ein anderes Speicherformat vorgesehen und gespeichert werden. Die Speicherung oder Integration in ein Fahrzeug oder dessen Steuergerät kann bei der Produktion und/oder während der Lebensdauer des Fahrzeugs erfolgen. Die Speicherung der Positionen, der Vergleich der Positionen und/oder die Erzeugung eines Steuerbefehls zur Anpassung der Sendecharakteristik kann in einem oder auch mehreren Steuergeräten durchgeführt werden. So kann die Beeinflussung der beiden oder auch mehrerer Kommunikationsdienste oder Kommunikationssystem reduziert oder ausgeschlossen werden, was zu einer Verbesserung der Signalqualität eines oder auch beider Dienste führt. Die Anpassung erfolgt richtungsselektiv, so dass in einer Richtung die Sendeleistung reduziert oder auf Null gesetzt wird, während in anderen Richtungen noch kommuniziert werden kann. Dies kann beispielsweise bei einer Anfahrt auf eine Mautstation dazu führen, dass die Sendeleistung nach vorne reduziert wird, während nach hinten mit anderen Fahrzeugen kommuniziert werden kann. Zur Realisierung können einzelne Abstrahlungskeulen aktiviert, deaktiviert oder verschoben werden. Auch können Verfahren wie beam-shaping oder beam-forming eingesetzt werden.

Der erste Kommunikationsdienst kann eine Fahrzeug zu Fahrzeug Kommunikation und/oder eine Fahrzeug zu Infrastruktur Kommunikation umfassen. Dieser zunehmend wichtige Kommunikationsdienst arbeitet üblicherweise im Frequenzband von 5,9 GHz, das eng benachbarte Frequenzbänder aufweist, so dass das Verfahren besonders hier Vorteile schafft.

Der zweite Kommunikationsdienst kann Bestandteil eines Mautsystems sein. Dieses System arbeitet üblicherweise im Frequenzband von 5,8 GHz, das eng benachbarte Frequenzbänder aufweist, was es für einen Einsatz des Verfahrens prädestiniert. Prinzipiell ist das Verfahren für alle benachbarten Frequenzbänder geeignet.

Die Anpassung der Sendecharakteristik kann durch eine Reduktion der Sendeleistung einer Sendeeinheit des Fahrzeugs erfolgen. Diese Maßnahme ist einfach umzusetzen und funktioniert auch bei einfachen rundstrahlenden Sendern oder Antennen.

Die Sendeleistung kann von 23 dB auf 10 dB reduziert werden. Eine derartige Absenkung verhindert erfolgreich eine Beeinflussung des zweite Kommunikationsdienstes durch den ersten Kommunikationsdienst.

Die Positionen können Angaben zu Breitengrad, Längengrad und Höhe umfassen. Da diese Daten zuverlässig als Standortdaten des Fahrzeugs im Fahrzeug bekannt sind, ist ein einfacher und alle Dimensionen umfassender Vergleich der Fahrzeugposition mit den Positionen der ortsfesten Installationen möglich. Vorzugsweise wird die Sendecharakteristik beziehungsweise Abstrahlcharakteristik der Sendeeinheit des Fahrzeugs anhand dieser Parameter angepasst.

Das definierte Umfeld zu den Positionen von ortsfesten Installationen kann einen Bereich von zehn bis fünfzig Metern, vorzugsweise fünfundzwanzig Metern, umfassen. Das Umfeld ist vorzugsweise konzentrisch um die ortsfesten Installation definiert. Bei der Definition des Umfeld kann die Send- und/oder Empfangscharakteristik der ortsfesten Installation berücksichtigt werden, so dass unregelmäßige Bereiche definiert werden können.

Die erfindungsgemäße Vorrichtung zur Verbesserung der Signalqualität mindestens eines Kommunikationsdienstes eines Fahrzeugs, wobei zwei unterschiedliche Kommunikationsdienste in benachbarten Frequenzbändern vorgesehen sind und wobei das Fahrzeug eingerichtet ist, zumindest mittels eines ersten Kommunikationsdienstes zu kommunizieren, umfasst, dass im Fahrzeug Positionen von ortsfesten Installationen eines zweiten Kommunikationsdienstes hinterlegt sind, dass das Fahrzeug seine Position mit den Positionen von ortsfesten Installationen vergleicht und dass eine Sendeeinheit des Fahrzeugs eingerichtet ist, in Abhängigkeit von dem Vergleich eine Sendecharakteristik des ersten Kommunikationsdienstes in einem definierten Umfeld zu den Positionen von ortsfesten Installationen anzupassen. Es gelten die gleichen Vorteile und Modifikationen wie zuvor beschrieben.

Die Vorrichtung kann ein Steuergerät des Fahrzeuges sein. Die Vorrichtung kann in einem oder mehreren bestehenden Steuergeräten integriert sein, was die Implementierung vereinfacht. Vorzugsweise ist die Vorrichtung in einem Steuergerät des ersten Kommunikationsdienstes, zum Beispiel V2X, integriert.

Das erfindungsgemäße Fahrzeug umfasst eine Sendeeinheit, eingerichtet zur Teilnahme an einem ersten Kommunikationsdienst, und eine Vorrichtung wie zuvor beschrieben. Es gelten die gleichen Vorteile und Modifikationen wie zuvor beschrieben.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung von zwei Kommunikationsdiensten;
- Figur 2: eine schematische Darstellung eines Fahrzeugs mit einem Kommunikationsdienst; und
- Figur 3: ein Ablaufdiagramm eines Verfahren zur Verbesserung der Signalqualität mindestens eines Kommunikationsdienstes.

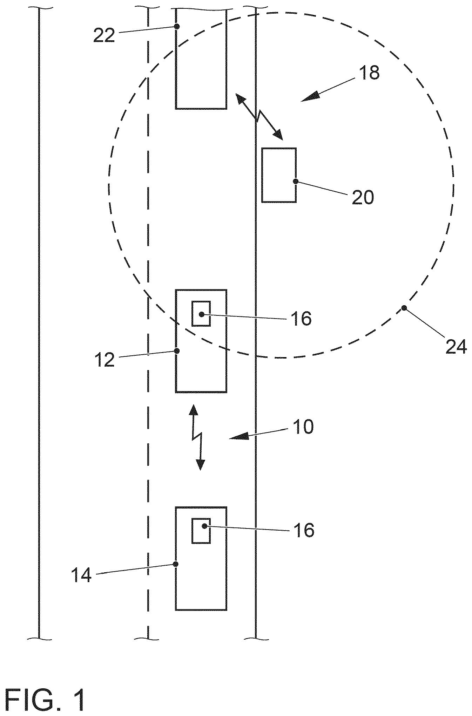

Figur 1 zeigt eine schematische Darstellung eines ersten Kommunikationsdienstes 10, in diesem Beispiel ein V2X Dienst. Dieser erste Kommunikationsdienst 10 erlaubt somit eine Kommunikation zwischen einem Fahrzeug 12 und einem weiteren Fahrzeug 14 sowie zu hier nicht dargestellter Infrastruktur, wie zum Beispiel Ampeln oder Wechselverkehrszeichen. Zur Teilnahme an dem ersten Kommunikationsdienst 10 enthält jedes Fahrzeug 12, 14 eine Sendeeinheit 16, die auch Bestandteil einer kombinierten Sende- und Empfangseinheit sein kann. Der erste Kommunikationsdienst 10 kann von stehenden und fahrenden Fahrzeugen 12, 14 genutzt werden. Die Teilnehmer des ersten Kommunikationsdienstes 10, hier die beiden Fahrzeuge 12, 14, kommunizieren in einem 5,9 GHz Frequenzband.

In der in Figur 1 dargestellten Verkehrssituation ist ein zweiter Kommunikationsdienst 18 aktiv. Der zweite Kommunikationsdienst 18 ist in diesem Beispiel ein Mautdienst oder Mautsystem, das in einem benachbarten Frequenzband von 5,8 GHz arbeitet. Als Teilnehmer oder Bestandteile des zweiten Kommunikationsdienstes 18 sind beispielhaft eine Mautstation 20 und ein Fahrzeug 22, zum Beispiel ein LKW, dargestellt.

Da die beiden Kommunikationsdienste 10 und 18 benachbarte Frequenzen verwenden, kann es zu Überlagerungen, Interferenzen oder Störungen und damit zu einer Verschlechterung der Signalqualität kommen, wenn keine geeigneten Gegenmaßnahmen getroffen werden.

Hier werden die Sendeeinheiten 16 von Fahrzeugen 12, die sich in einem definierten Umfeld oder Bereich 24 befinden, angepasst, um eine Störung des zweiten Kommunikationsdienstes 18 zu vermeiden oder zu verringern. Das Umfeld 24 kann zum Beispiel anhand der Sendeleistung beziehungsweise der Reichweite der Mautstation 20 oder anhand einer Beeinflussungsrate oder eines Störungsfaktors zwischen den beiden Diensten 10, 18 definiert werden. Hier ist ein um die Mautstation 20 konzentrisch angeordnetes Umfeld 24 dargestellt. Aus Gründen der Übersichtlichkeit ist das Umfeld 24 nicht maßstabsgerecht dargestellt. Der Radius des Umfeld 24 beträgt zum Beispiel fünfundzwanzig Meter.

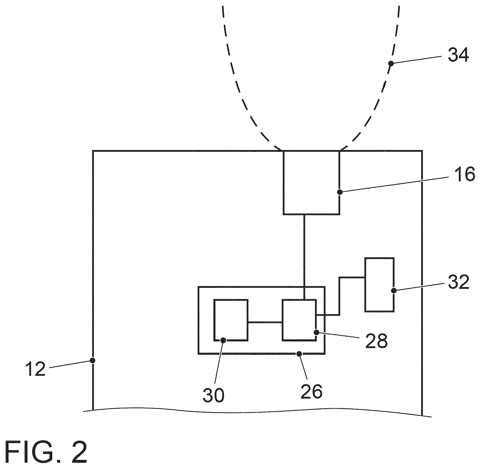

Figur 2 zeigt beispielhaft in detaillierter Darstellung einen Bereich des Fahrzeugs 12 mit der Sendeeinheit 16 und einem Steuergerät 26. Das Steuergerät 26 kann zum Beispiel ein V2X-Steuergerät sein und kommuniziert mit der Sendeeinheit 16.

Das Steuergerät 26 enthält eine Recheneinheit 28 und eine Positionsliste 30, mit Angaben zu geographischen Standorten von Mautstationen 20 und gegebenenfalls weiteren Infrastrukturen des zweiten Kommunikationsdienstes 18. Das Bezugszeichen 30 kann auch einen Speicher bezeichnen, in dem eine Positionsliste 30 oder ähnliche Darstellung abgelegt werden kann.

Die Positionsliste 30 umfasst in diesem Beispiel Angaben zu den Mautstationen 20 in folgendem Format: Station1: (Latitude1, Longitude1, Altitude1) bis StationN: (LatitudeN, LongitudeN, AltitudeN). Alternativ kann auf die Höhenangabe verzichtet werden, da oftmals eine zweidimensionale Ausrichtung einfacher und bereits erfolgreich sein kann.

Das Fahrzeug 12 umfasst ferner ein Navigationsmodul 32, das ein entsprechendes Steuergerät oder ein Sensor zur Erfassung der aktuellen Position des Fahrzeugs 12, wie zum ein GPS-Sensor, sein kann. Das Navigationsmodul 32 ist mit dem Steuergerät 26 beziehungsweise mit der Recheneinheit 28 verbunden, so dass die aktuelle Position des Fahrzeugs 12 in dem Steuergerät 26 vorhanden beziehungsweise bekannt ist. Das Navigationsmodul 32 kann auch Bestandteil des Steuergerätes 26 sein.

Das Steuergerät 26 steuert auf Basis der vorliegenden Information, das heißt der Position des Fahrzeugs 12 und der Positionen der Mautstationen 20, die Sendeeinheit 12 derart an, dass ihr Abstrahlungsbereich 34 angepasst wird. Dies kann über eine Verringerung der Sendeleistung und/oder eine Änderung der Abstrahlcharakteristik realisiert werden.

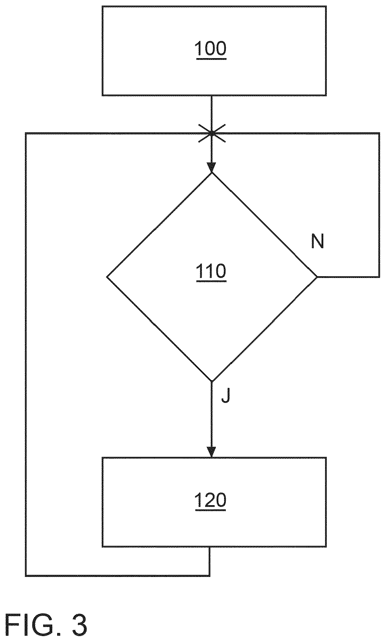

Anhand von Figur 3 wird nun das Verfahren beschrieben, das in diesem Beispiel weitestgehend in dem Steuergerät 26 ausgeführt wird.

In einem ersten Schritt 100 wird die Positionsliste 30 in das Steuergerät 26 eingebracht. Dies kann zum Beispiel bei der Herstellung des Steuergeräts 26 geschehen. Alternativ oder zur Einspielung von Aktualisierungen kann die Positionsliste 30 während der Laufzeit des Fahrzeugs 12, auch mehrmalig, gespeichert oder aktualisiert werden. Statt einer Liste können auch andere Formen wie zum Beispiel eine Matrix oder dergleichen gewählt werden. Wichtig ist, dass die Positionen von ortsfesten Installationen, wie Mautstationen 20, des zweiten Kommunikationsdienstes 18 in dem Steuergerät 26 vorhanden sind. Diese Hinterlegung kann gegebenenfalls auch ohne Speicherung über einen Online-Zugang geschehen.

In einem zweiten Schritt 110 wird überprüft, ob das Fahrzeug 12 sich in der Nähe einer Mautstation 20 befindet. Dazu wird die Position des Fahrzeugs 12 mit Positionen von Mautstationen 20 verglichen. Zu jeder Positionen von Mautstationen 20 ist ein Umfeld 24 definiert. Dieses Umfeld kann für alle Mautstationen 20 identisch sein, oder es ist an die jeweiligen Gegebenheiten angepasst, wobei dabei örtliche Charakteristika der Umgebung und/oder Sende-Empfangseigenschaften der jeweiligen Mautstation 20 berücksichtigt werden.

Es wird nun geprüft, ob das Fahrzeug 12 sich in einem der Umfelde 24 befindet. Ist dies der Fall, wird zu einem dritten Schritt 120 verzweigt. Befindet sich das Fahrzeug 12 außerhalb eines Umfelds wird zurück zu Schritt 110 verzweigt, das heißt dass die Sendecharakteristik des ersten Kommunikationsdienstes 10 beziehungsweise der Sendeeinheit 16 nicht verändert oder angepasst wird.

In dem dritten Schritt 120 wird nun die Sendecharakteristik des ersten Kommunikationsdienstes 10 beziehungsweise der Sendeeinheit 16 angepasst. Dies kann über eine Verringerung der Sendeleistung und/oder eine Änderung der Abstrahlcharakteristik realisiert werden. Die Anpassung basiert zumindest auf dem geographischen Eintrag in der Positionsliste 30. Zusätzlich können weitere Informationen zu der jeweiligen Mautstation 20 vermerkt und berücksichtigt werden. Dies können zum Beispiel elektrische oder funktechnische Eigenschaften der Mautstation wie zum Beispiel Sendeleistung oder Abstrahlungscharakteristik sein. Weiterhin können Statusinformationen wie aktiv oder ausgeschaltet oder das Frequenzband des zweiter Kommunikationsdienstes 18 in der Positionsliste 30 vermerkt beziehungsweise in dem Steuergerät 26 vorhanden sein. Auch kann vorgesehen sein, dass die Art und Weise der Anpassung der Sendecharakteristik derart vorgegeben ist.

Nach der Anpassung beziehungsweise der Erzeugung und Absendung eines entsprechenden Steuerbefehls durch das Steuergerät 26 an die Sendeeinheit 16 wird wieder zurück zu Schritt 110 verzweigt. Somit ergibt sich eine Überwachungsschleife, in der dauerhaft geprüft wird, ob der aktuelle Zustand der Sendeeinheit 16, entweder angepasst (Schritt 120) oder unangepasst (N nach Schritt 110), mit den Vorgaben für die Mautstationen 20 des zweiten Kommunikationsdienstes 18 übereinstimmen.

### Bezugszeichenliste

- 10: erster Kommunikationsdienst
- 12: Fahrzeug
- 14: Fahrzeug
- 16: Sendeeinheit
- 18: zweiter Kommunikationsdienst
- 20: Mautstation
- 22: Fahrzeug
- 24: Umfeld
- 26: Steuergerät
- 28: Recheneinheit
- 30: Positionsliste
- 32: Navigationsmodul
- 34: Abstrahlungsbereich
- 100: erster Schritt
- 110: zweiter Schritt
- 120: dritter Schritt

## Patentansprüche

1. Verfahren zur Verbesserung der Signalqualität mindestens eines Kommunikationsdienstes (18) im Bereich eines Fahrzeugs (12), wobei zwei unterschiedliche Kommunikationsdienste (10, 18) in benachbarten Frequenzbändern vorgesehen sind, und wobei zumindest ein erster Kommunikationsdienst (10) im Fahrzeug (12) implementiert ist, wobei im Fahrzeug (12) Positionen (30) von ortsfesten Installationen (20) eines zweiten Kommunikationsdienstes (18) hinterlegt werden, wobei das Fahrzeug (12) seine Position mit den Positionen (30) von ortsfesten Installationen (20) vergleicht, und wobei eine Sendecharakteristik des ersten Kommunikationsdienstes (10) in einem definierten Umfeld (24) zu den Positionen (30) von ortsfesten Installationen (20) angepasst wird, dass die Anpassung der Sendecharakteristik durch eine Änderung der Abstrahlcharakteristik einer Sendeeinheit (16) des Fahrzeugs (12) derart erfolgt, dass die Abstrahlung in Richtung einer ortsfesten Installation (20) verringert wird, **dadurch gekennzeichnet, dass** die Anpassung der Sendecharakteristik richtungsselektiv erfolgt, und wobei bei der Definition des Umfelds eine Sende- und/oder Empfangscharakteristik der ortsfesten Installation (20) berücksichtigt wird, so dass unregelmäßige Bereiche definiert werden.

2. Verfahren nach Anspruch 1, **dadurch gekennzeichnet, dass** der erste Kommunikationsdienst (10) eine Fahrzeug zu Fahrzeug Kommunikation und/oder eine Fahrzeug zu Infrastruktur Kommunikation umfasst.

3. Verfahren nach einem der vorhergehenden Ansprüche, **dadurch gekennzeichnet, dass** der zweite Kommunikationsdienst (18) Bestandteil eines Mautsystems ist.

4. Verfahren nach einem der vorhergehenden Ansprüche, **dadurch gekennzeichnet, dass** die Anpassung der Sendecharakteristik durch eine Reduktion der Sendeleistung einer Sendeeinheit (16) des Fahrzeugs (12) erfolgt.

5. Verfahren nach einem der vorhergehenden Ansprüche, **dadurch gekennzeichnet, dass** die Positionen (30) Angaben zu Breitengrad, Längengrad und Höhe umfassen.

6. Verfahren nach einem der vorhergehenden Ansprüche, **dadurch gekennzeichnet, dass** das definierte Umfeld (24) zu den Positionen von ortsfesten Installationen (20) einen Bereich von zehn bis fünfzig Metern, vorzugsweise fünfundzwanzig Metern, umfasst.

7. Vorrichtung zur Verbesserung der Signalqualität mindestens eines Kommunikationsdienstes (18) im Bereich eines Fahrzeugs (12), wobei zwei unterschiedliche Kommunikationsdienste (10, 18) in benachbarten Frequenzbändern vorgesehen sind, und wobei das Fahrzeug (12) eingerichtet ist, zumindest mittels eines ersten Kommunikationsdienstes (10) zu kommunizieren, wobei im Fahrzeug (12) Positionen (30) von ortsfesten Installationen (20) eines zweiten Kommunikationsdienstes (18) hinterlegt sind, wobei das Fahrzeug (12) seine Position mit den Positionen (30) von ortsfesten Installationen (20) vergleicht, und wobei eine Sendeeinheit (16) des Fahrzeugs (12) eingerichtet ist, in Abhängigkeit von dem Vergleich eine Sendecharakteristik des ersten Kommunikationsdienstes (10) in einem definierten Umfeld (24) zu den Positionen (30) von ortsfesten Installationen (20) anzupassen, dass die Anpassung der Sendecharakteristik durch eine Änderung der Abstrahlcharakteristik der Sendeeinheit (16) des Fahrzeugs (12) derart erfolgt, dass die Abstrahlung in Richtung einer ortsfesten Installation (20) verringert wird, **dadurch gekennzeichnet, dass** die Anpassung der Sendecharakteristik richtungsselektiv erfolgt, und wobei bei der Definition des Umfelds eine Sende- und/oder Empfangscharakteristik der ortsfesten Installation (20) berücksichtigt wird, so dass unregelmäßige Bereiche definiert werden.

8. Vorrichtung nach Anspruch 7, **dadurch gekennzeichnet, dass** die Vorrichtung ein Steuergerät (26) des Fahrzeuges (12) ist.

9. Fahrzeug mit einer Sendeeinheit (16), eingerichtet zur Teilnahme an einem ersten Kommunikationsdienst (10), und einer Vorrichtung nach einem der Ansprüche 7 und 8.

## Claims

1. Method for improving the signal quality of at least one communications service (18) in the region of a vehicle (12), wherein two different communications services (10, 18) are provided in adjacent frequency bands, and wherein at least one first communications service (10) is implemented in the vehicle (12), wherein positions (30) of positionally fixed installations (20) of a second communications service (18) are stored in the vehicle (12), wherein the vehicle (12) compares its position with the positions (30) of positionally fixed installations (20), and wherein a transmission characteristic of the first communications service (10) is adapted in a defined area (24) surrounding the positions (30) of the positionally fixed installations (20), in that the adaptation of the transmission characteristic is carried out by changing the irradiation characteristic of a transmitter unit (16) of the vehicle (12) in such a way that the irradiation is reduced in the direction of a positionally fixed installation (20), **characterized in that** the adaptation of the transmission characteristic occurs selectively with respect to direction, and wherein a transmission and/or reception characteristic of the positionally fixed installation (20) is taken into account in the definition of the surrounding area so that irregular regions are defined.

2. Method according to Claim 1, **characterized in that** the first communications service (10) comprises a vehicle-to-vehicle communication and/or a vehicle-to-infrastructure communication.

3. Method according to one of the preceding claims, **characterized in that** the second communication service (18) is a component of a toll system.

4. Method according to one of the preceding claims, **characterized in that** the adaptation of the transmission characteristic is carried out by reducing the transmission power of a transmitter unit (16) of the vehicle (12).

5. Method according to one of the preceding claims, **characterized in that** the positions (30) comprise information about degrees latitude, degrees longitudinal and altitude.

6. Method according to one of the preceding claims, **characterized in that** the defined surrounding area (24) comprises a region of 10 to 50 metres, preferably 25 metres, with respect to the positions of positionally fixed installations (20).

7. Device for improving the signal quality of at least one communications service (18) in the region of a vehicle (12), wherein two different communications services (10, 18) are provided in adjacent frequency bands, and wherein the vehicle (12) is configured to communicate at least by means of a first communications service (10), wherein positions (30) of positionally fixed installations (20) of a second communications service (18) are stored in the vehicle (12), wherein the vehicle (12) compares its position with the positions (30) of positionally fixed installations (20), and wherein a transmitter unit (16) of the vehicle (12) is configured to adapt a transmission characteristic of the first communications service (10) in a defined area (24) surrounding the positions (30) of positionally fixed installations (20) in accordance with the comparison, in that the adaptation of the transmission characteristic is carried out by changing the irradiation characteristic of the transmitter unit (16) of the vehicle (12) in such a way that the irradiation is reduced in the direction of a positionally fixed installation (20), **characterized in that** the adaptation of the transmission characteristic occurs selectively with respect to direction, and wherein a transmission and/or reception characteristic of the position of a fixed installation (20) is taken into account in the definition of the surrounding area, so that irregular regions are defined.

8. Device according to Claim 7, **characterized in that** the device is a control unit (26) of the vehicle (12) .

9. Vehicle having a transmitter unit (16), configured to participate in a first communications service (10), and a device according to one of Claims 7 and 8.

## Revendications

1. Procédé d'amélioration de la qualité de signal d'au moins un service de communication (18) au niveau d'un véhicule (12), deux services de communication différents (10, 18) étant prévus dans des bandes de fréquences adjacentes, et au moins un premier service de communication (10) étant mis en œuvre dans le véhicule (12), des positions (30) d'installations fixes (20) d'un deuxième service de communication (18) étant mémorisées dans le véhicule (12), le véhicule (12) comparant sa position avec les positions (30) d'installations fixes (20), et une caractéristique d'émission du premier service de communication (10) dans un environnement défini (24) étant adaptée aux positions (30) des installations fixes (20), en ce que l'adaptation de la caractéristique d'émission est obtenue par modification de la caractéristique de rayonnement d'une unité d'émission (16) du véhicule (12) de telle sorte que le rayonnement en direction d'une installation fixe (20) soit réduit, **caractérisé en ce que** l'adaptation de la caractéristique d'émission est effectuée de manière sélective selon la direction, et une caractéristique d'émission et/ou de réception de l'installation fixe (20) étant prise en compte lors de la définition de l'environnement de manière à définir des zones irrégulières.

2. Procédé selon la revendication 1, **caractérisé en ce que** le premier service de communication (10) comprend une communication de véhicule à véhicule et/ou une communication de véhicule à infrastructure.

3. Procédé selon l'une des revendications précédentes, **caractérisé en ce que** le deuxième service de communication (18) fait partie d'un système à péage.

4. Procédé selon l'une des revendications précédentes, **caractérisé en ce que** l'adaptation de la caractéristique d'émission est réalisée par réduction de la puissance d'émission d'une unité d'émission (16) du véhicule (12).

5. Procédé selon l'une des revendications précédentes, **caractérisé en ce que** les positions (30) comprennent des informations relatives à la latitude, la longitude et l'altitude.

6. Procédé selon l'une des revendications précédentes, **caractérisé en ce que** l'environnement défini (24) aux positions d'installations fixes (20) comprend une zone allant de dix à cinquante mètres, de préférence de vingt-cinq mètres.

7. Dispositif d'amélioration de la qualité de signal d'au moins un service de communication (18) au niveau d'un véhicule (12), deux services de communication différents (10, 18) étant prévus dans des bandes de fréquences adjacentes, et le véhicule (12) étant adapté pour communiquer au moins au moyen d'un premier service de communication (10), les positions (30) des installations fixes (20) d'un deuxième service de communication (18) étant mémorisées dans le véhicule (12), le véhicule (12) comparant sa position avec les positions (30) d'installations fixes (20), et une unité d'émission (16) du véhicule (12) étant conçue pour adapter une caractéristique d'émission du premier service de communication (10) dans un environnement défini (24) aux positions (30) d'installations fixes (20) en fonction de la comparaison, en ce que l'adaptation de la caractéristique d'émission est adaptée par modification de la caractéristique de rayonnement de l'unité d'émission (16) du véhicule (12) de telle sorte que le rayonnement en direction d'une installation fixe (20) soit réduit, **caractérisé en ce que** l'adaptation de la caractéristique d'émission est effectuée de manière sélective selon la direction, et une caractéristique d'émission et/ou de réception de l'installation fixe (20) étant prise en compte lors de la définition de l'environnement de manière à définir des zones irrégulières.

8. Dispositif selon la revendication 7, **caractérisé en ce que** le dispositif est un appareil de commande (26) du véhicule (12).

9. Véhicule comprenant une unité d'émission (16), adaptée pour contribuer à un premier service de communication (10), et un dispositif selon l'une des revendications 7 et 8.
